(19) Europäisches Patentamt / European Patent Office / Office européen des brevets

(11) **EP 3 223 930 B1**

(12) **EUROPÄISCHE PATENTSCHRIFT**

(45) Veröffentlichungstag und Bekanntmachung des Hinweises auf die Patenterteilung:
**05.08.2020 Patentblatt 2020/32**

(21) Anmeldenummer: **15801988.5**

(22) Anmeldetag: **19.11.2015**

(51) Int Cl.:
**B01D 53/053** (2006.01)

(86) Internationale Anmeldenummer:
**PCT/EP2015/002325**

(87) Internationale Veröffentlichungsnummer:
**WO 2016/082924 (02.06.2016 Gazette 2016/22)**

(54) **VERFAHREN UND VORRICHTUNG ZUR MENGEN- UND REINHEITSKONTROLLE BEI DRUCKWECHSELADSORPTIONSANLAGEN**

METHOD AND DEVICE FOR CHECKING QUANTITY AND PURITY IN PRESSURE SWING ADSORPTION PLANTS

PROCÉDÉ ET DISPOSITIF DE CONTRÔLE DE QUANTITÉ ET DE PURETÉ POUR DES INSTALLATIONS D'ADSORPTION MODULÉE EN PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2014 DE 102014017600**

(43) Veröffentlichungstag der Anmeldung:
**04.10.2017 Patentblatt 2017/40**

(73) Patentinhaber: **Linde GmbH
82049 Pullach (DE)**

(72) Erfinder:
• **GRAHL, Matthias
80639 München (DE)**
• **CICHY, Thomas
69412 Eberbach (DE)**
• **WILDGRUBER, Klaus
80992 München (DE)**

(74) Vertreter: **Lu, Jing et al
Linde GmbH
Intellectual Property EMEA
Dr.-Carl-von-Linde-Straße 6-14
82049 Pullach (DE)**

(56) Entgegenhaltungen:
EP-A1- 0 447 029    FR-A1- 2 557 808
US-A1- 2008 047 426    US-A1- 2008 066 616
US-A1- 2011 239 698

EP 3 223 930 B1

**Beschreibung**

Die Erfindung betrifft ein Verfahren zur Lastanpassung, Mengen- und Reinheitskontrolle einer Druckwechseladsorptionsanlage gemäß Anspruch 1 und eine Vorrichtung zur Durchführung des Verfahrens gemäß Anspruch 9.

Im Stand der Technik ist eine Mengenkontrolle der Produktmenge innerhalb einer Druckwechseladsorptionsanlage bekannt, die mittels einer Mess- und Regelvorrichtung erfolgt. Dabei wird insbesondere bei Anlagen, die einen Produktpuffer aufweisen, die Produktmenge geregelt, die dem Produktpuffer entnommen wird. Diese Regelvorrichtung kann gleichzeitig auch als Druckregelung verwendet werden. Ist die abgenommene Produktmenge kleiner als eine vorgegebene Designmenge, wird erst der Druck geregelt, wobei anschließend bei Erreichen der Designmenge die Mengenregelung in Kraft tritt und ein Überfahren der Anlage verhindert.

Eine Lastanpassung erfolgt bei PSA-Anlagen (Pressure Swing Adsorption) in der Regel durch Verlängerung des Arbeitszyklus. Im Stand der Technik sind insbesondere zwei Alternativen bekannt mittels derer eine derartige Verlängerung erfolgen kann.

In einer Alternative erfolgt eine Verlängerung des Arbeitszyklus mittels einer Drosselung des Feedgasmengenstroms bei reduzierter Produktabnahme. Die Drosselung kann durch eine Drehzahlregelung eines Feedgasverdichters oder durch eine Regelung des Mengenstroms aus einem Vorratspuffer erfolgen. Der Takt, in welchem Feedgas einem Adsorber zugeführt wird, wird entsprechend verlängert. Dadurch wird dem Adsorber somit immer ungefähr dieselbe absolute Feedgasmenge zugeführt und dieselbe absolute Produktmenge abgenommen. Die Zufuhr und Abnahme erfolgt jeweils verteilt über einen längeren Zeitraum.

In einer anderen Alternative erfolgt eine Verlängerung des Arbeitszyklus bei zunächst gleichbleibendem momentanen Feedgasmengenstrom. Der Arbeitszyklus weist zusätzlich einen sogenannten Leerlauftakt auf. Während des Leerlauftaktes strömt kein Feedgas zur Anlage und es wird kein Produkt erzeugt. Bei Anwendung dieser Alternative ist ein Produktpuffer notwendig, aus welchem während des Leerlauftaktes die geforderte Produktmenge entnommen wird. Ein eventuell vorhandener Feedgasverdichter läuft während des Leerlauftaktes bei reduzierter Energieaufnahme. Die mittlere Feedgasmenge sinkt in diesem Fall ungefähr proportional zur reduzierten Produktabnahme.

Diese Alternative wird vor allem dann angewandt, wenn eine Regelung der Feedgasmenge schwer möglich oder unerwünscht ist, wie beispielsweise bei einem stark schwankenden Abnahmeprofil oder wenn eine Drehzahlregelung hohe Kosten verursacht. Es ist für die Feedgasmenge kein Regelmechanismus notwendig, da diese nur zwischen 100% und Null variiert. Insbesondere wird diese Alternative angewandt, wenn ohnehin ein Produktpuffer notwendig ist. Dies ist beispielsweise der Fall wenn, abgesehen von einem Leerlauftakt, auch während weiterer Takte kein Produkt erzeugt wird oder der Produktdruck sonst stark schwanken würde, wie es insbesondere bei Verfahren mit nur einem oder zwei Adsorbern der Fall ist.

Bei beiden Alternativen besteht die Notwendigkeit, eine Produktabnahme, die größer als eine vorgegebene Designmenge ist, zu verhindern. Dies ist beispielsweise notwendig, wenn die Feedgasmenge zur Anlage limitiert ist. Diese Limitierung kann in der maximalen Kapazität des Feedgasverdichters oder in einer maximal zulässigen Strömungsgeschwindigkeit in der Schüttung bestehen oder durch Regenerierbedingungen gegeben sein, wie beispielsweise der Größe der Vakuumpumpe bei VPSA-Anlagen (Vacuum Pressure Swing Adsorption). Grundsätzlich gibt es somit eine maximale Produktmenge, die aus der Druckwechseladsorptionsanlage abgezogen werden kann.

Nachteilig an den bekannten Methoden zur Mengenbegrenzung des Produktstroms aus einem Produktpuffer ist, dass überhaupt ein Regelventil notwendig ist und somit insbesondere die Störanfälligkeit erhöht wird. Weiterhin kann ein Überfahren des Adsorbers im instationären Fall, wie beispielsweise beim Starten der Anlage, nicht verhindert werden. Die Zeit bis zum Erreichen einer spezifizierten Reinheit erhöht sich dadurch erheblich. Insbesondere bei großen Produktpuffern stellt dies ein signifikantes Problem dar. Auch ist ein kurzzeitiges Überschreiten der Designmenge auch dann nicht möglich, wenn die über einen relativ kurzen Zeitraum gemittelte Produktmenge die Designmenge nicht überschreitet und deshalb kein Reinheitseinbruch zu erwarten ist. Schwankt die abgenommene Produktmenge relativ stark um den vorgegebenen Designwert, wird die Mengenbegrenzung immer wieder anspringen, so dass die volle Designmenge unter Umständen nicht geliefert werden kann. Es ist zwar möglich, die Mengenbegrenzung bzw. Mengenregelung relativ träge einzustellen. Dies verhindert allerdings dann ein Überfahren der Anlage nicht mehr zuverlässig.

Durch den Einsatz einer Mengenregelung zwischen Adsorber und Produktpuffer können einige der oben benannten Nachteile umgangen werden. So kann z.B. die dem Puffer entnommene Produktmenge die Designmenge während eines instationären Vorgangs durchaus überschreiten und somit auch bei starken Schwankungen im Mittel die volle Designmenge geliefert werden.

Eine solche Mengenregelung birgt aber selbst weitere Nachteile:
Der Mengenstrom zwischen Adsorber und Produktpuffer ist stark diskontinuierlich. Je nach Verfahren gibt es mehr oder weniger lange Phasen, in denen kein Produkt in den Produktpuffer strömt. Der Zeitraum während dessen Produkt in den Produktpuffer strömt, kann sehr kurz (unter anderem nur wenige Sekunden) sein. Dieser Mengenstrom ist aus diesem Grund nur schwer zu messen und zu regeln. Weiterhin muss in der Regel diese zweite Mengenmessung zwischen Adsorber und Produktpuffer zusätzlich zu einer ersten Mengenmessung nach dem Produktpuffer erfolgen, da sie die erste Mengenmessung nicht ersetzen kann, denn diese zweite Mengenmessung ist starken Schwankungen unterworfen und somit für eine Bilanzierung oder eine Abrechnung ungeeignet.

Die US 2008/0047426 offenbart eine Druckwechseladsorptionsanlage zur Lufttrennung, wobei der Puffertank mit einem Drucksensor versehen ist und die Durchflussmenge mittels des Druckverlaufs gerechnet wird.

Die EP 2181752 A1 beschreibt eine Begrenzung des Produktstroms, der aus dem Adsorber in den Produktpuffer strömt, wobei die Entnahme des Produkts aus dem Adsorber bei geschlossener Feedgasleitung erfolgt. Ein Überfahren des Adsorbers wird beispielsweise dadurch verhindert, dass der Adsorber nur um eine bestimmte Druckdifferenz in Richtung Produktpuffer hin entspannt wird. Nachteilig ist, dass die Unterbrechung der Feedgaszufuhr während des Produktionstaktes einen signifikanten Zeitverlust darstellt. Auch fällt der Druck während des Produktionsschritts, wodurch die Kapazität vermindert wird.

Hiervon ausgehend liegt daher der vorliegenden Erfindung die Aufgabe zugrunde, die oben beschrieben Nachteil zu beseitigen und die abgenommene Produktmenge auf einfache Weise zu begrenzen.

Diese Aufgabe wird durch ein Verfahren zur Lastanpassung, Mengen- und Reinheitskontrolle einer Druckwechseladsorptionsanlage mit den Merkmalen des Anspruchs 1 gelöst.

Danach ist vorgesehen, dass bei einem Verfahren zur Lastanpassung, Mengen- und Reinheitskontrolle einer Druckwechseladsorptionsanlage die Druckwechseladsorptionsanlage einen Arbeitszyklus durchläuft und der Arbeitszyklus wenigstens einen Produktionstakt umfasst, wobei während des Produktionstaktes eine ununterbrochene Zufuhr eines Feedgases in wenigstens einen Adsorber erfolgt und der Zeitpunkt der Beendigung des Produktionstaktes bestimmt wird durch

- eine Ermittlung der aus dem wenigstens einen Adsorber während des Produktionstaktes entnommene Menge $M_A(t)$ des Produktgases, wobei die Beendigung des Produktionstaktes erfolgt, wenn die Menge $M_A(t)$ größer oder gleich einer vorgegebenen Menge $M_{Design}$ ist, und wobei die Menge $M_A(t)$ aus der dem Produktpuffer entnommenen Menge $Q(t)$ und dem Druckverlauf im Produktpuffer berechnet wird.

Das erfindungsgemäße Verfahren eignet sich sowohl für Anlagen mit nur einem Adsorber als auch für Anlagen mit zwei oder mehr im Wechsel betriebenen Adsorbern.

Unter dem Begriff "Mengenkontrolle" ist im Sinne der Erfindung ein Verfahren zu verstehen, welches es ermöglicht, die Abnahme einer Produktmenge, die größer als eine vorgegebene Designmenge ist, zu verhindern. Somit wird eine unzulässig hohe Verunreinigung des Produkts verhindert.

Unter dem Begriff "Lastanpassung" ist im Sinne der Erfindung eine Anpassung einzelner Arbeitsschritte oder Einsatzstoffe an eine entnommene Produktmenge (Verbrauch) zu verstehen, welche es ermöglicht Einsatzstoff und Energie zu sparen. Beispielsweise kann der Umfang der verwendeten Feedgasmenge angepasst werden.

Unter dem Begriff "Arbeitszyklus" ist im Sinne der Erfindung eine Abfolge verschiedener Arbeitsschritte einer Druckwechseladsorptionsanlage, wie beispielsweise ein Produktionsschritt, in welchem Produkt produziert wird oder ein Regenerationsschritt, in welchem ein Adsorber regeneriert wird, zu verstehen, wobei die Arbeitsschritte in einer vorgegebenen Reihenfolge nacheinander erfolgen. Ein Arbeitsakt endet mit Beendigung des letzten Arbeitsschrittes eines Arbeitszyklus und ein neuer Arbeitszyklus kann, beginnend mit dem ersten Arbeitsschritt des Arbeitszyklus, anschließend erneut ausgeführt werden.

Unter dem Begriff "Produktionstakt" ist im Sinne der Erfindung ein Arbeitsschritt eines Arbeitszyklus zu verstehen, in welchem gereinigtes Produktgas aus einem Adsorber abgeleitet wird, wobei in dem Adsorber eine Abtrennung wenigstens einer stärker adsorbierenden Komponente aus einem Rohprodukt erfolgt.

Unter dem Begriff "Schüttung" ist im Sinne der Erfindung Adsorptionsmaterial innerhalb eines Adsorbers zu verstehen. Unter der Gesamthöhe einer Schüttung ist der Abstand zwischen Eintritt des Feedgases in die Schüttung und Austritt des Produktgases aus der Schüttung zu verstehen.

Unter dem Begriff "Feedgas" ist im Sinne der Erfindung eine Mischung von Gasen (Rohprodukt) zu verstehen, die neben mindestens einer weniger stark adsorbierenden Komponente (angereichert im Produktgas) wenigstens noch eine weitere, stärker adsorbierenden Komponente (angereichert im Abgas) aufweist.

Unter dem Begriff "Beladungsfront" ist im Sinne der Erfindung die Position innerhalb eines Adsorbers zu verstehen, bis zu der dieser Adsorber bereits in hohem Maße mit der abzutrennenden Komponente beladen ist, z.B. zu mehr als 50% einer maximalen Beladungskapazität für diese Komponente. Während des weiteren Voranschreitens des Adsorptionsvorgangs kann die abzutrennende Komponente bis zu dieser Position nur noch in geringem Maße adsorbieren und wird erst jenseits der aktuellen Position der Beladungsfront in größerem Maße zurückgehalten. Auf diese Weise wandert die Adsorptionsfront während des Produktionstaktes in Richtung Produktgasaustritt.

Unter dem Begriff "Produktgas" ist im Sinne der Erfindung sowohl ein im Wesentlichen aus einem chemischen Element (wie beispielsweise Sauerstoff) bestehendes Gas ("reines Gas") als auch ein Gas, welches eine Mischung verschiedener chemischer Elemente aufweist, zu verstehen. Dabei bezieht sich der Begriff "reines Gas" nicht ausschließlich auf eine absolute Reinheit (100 % des entsprechenden chemischen Elements) sondern auf ein Produktgas, welches die Anforderungen an dem gewünschten Reinheitsgrad erfüllt. Je nach Anforderungen an das entsprechende Produkt weist somit ein Produktgas unterschiedliche Reinheitsgrade auf.

Unter dem Begriff "Designmenge" ist im Sinne der Erfindung eine definierte Menge an Produktgas zu verstehen, die durch die Anlage in einem Arbeitszyklus unter Einhaltung des gewünschten Reinheitsgrades bereitgestellt werden kann.

Unter dem Begriff "Produktpuffer" ist im Sinne der Erfindung eine Vorrichtung zu verstehen, die ausgebildet ist Produktgas, zu lagern und das Produktgas einem Verbraucher bei Bedarf zuzuführen.

Das erfindungsgemäße Verfahren ermöglicht eine Mengenbegrenzung, die es erlaubt ein Überfahren des wenigstens einen Adsorbers einer Druckwechseladsorptionsanlage, insbesondere einer PSA- oder VPSA-Anlage, zu verhindern. Dabei wird nicht die Menge begrenzt, die aus dem Produktpuffer entnommen wird, sondern der Produktionstakt wird zeitlich so limitiert, dass eine Überlastung des wenigstens einen Adsorbers ausgeschlossen ist. Dadurch entfällt die Notwendigkeit eines Regelventils in der Leitung nach einem Produktpuffer, die Anlage wird somit einfacher und weniger störanfällig. Weiterhin wird ein Überfahren des wenigstens einen Adsorber auch während des Startens der Anlage verhindert, so dass die geforderte Produktreinheit nach Stillstand und Entleeren des Produktpuffers schneller erreicht wird. Auch wird eine absolut stufenlose Lastanpassung an den Bedarf des Kunden ermöglicht.

Das erfindungsgemäße Verfahren weist eine ununterbrochene Feedgaszufuhr zum Adsorber während des Produktionstaktes auf. Dadurch fällt, im Gegensatz zu der im Stand der Technik beschriebenen Entnahme des Produkts bei geschlossener Feedgasleitung, kein Zeitverlust an. Bei einer Unterbrechung der Feedgaszufuhr während des Produktionstaktes müsste der Feedgasverdichter größer ausfallen, welches einen höheren Raumbedarf und höhere Kosten bedingt. Dies ist insbesondere bei sehr großen Anlagen ein signifikanter Nachteil.

Weiterhin läuft der Produktionsschritt bei einer ununterbrochenen Feedgaszufuhr bei steigendem Druck ab, während bei Unterbrechung der Feedgaszufuhr der Druck während des Produktionsschrittes fällt und somit die Kapazität der Druckwechseladsorptionsanlage gemindert ist. Auch ist bei einer ununterbrochenen Feedgaszufuhr der mittlere Druckunterschied zwischen Feedgasdruck und Produktdruck deutlich niedriger als bei im Stand der Technik bekannten Anlagen, so dass der Energiebedarf bei gleichem Abgabedruck stark sinkt.

In einer Ausführungsform erfolgt im Produktionstakt eine Überleitung von Produktgas aus dem wenigstens einen Adsorber in einen Produktpuffer während gleichzeitig Feedgas in den Adsorber geleitet wird. Ein Beenden des Produktionstaktes erfolgt durch Beendigung der Überleitung des Produktgases in den Produktpuffer und der Einleitung des Feedgases in den Adsorber. Die Überleitung kann beispielsweise mittels eines geeigneten Gasleitungssystems erfolgen, wobei eine Beendigung durch Schließen eines am Gasleitungssystem angeordneten Ventils erfolgt.

In einer Ausführungsform weist die Druckwechseladsorptionsanlage einen Arbeitszyklus auf, der wenigstens einen Produktionstakt enthält, wobei während des Produktionstaktes eine ununterbrochene Zufuhr eines Feedgases in wenigstens einen Adsorber erfolgt. Dabei wird der Zeitpunkt der Beendigung des Produktionstaktes durch die aus dem wenigstens einen Adsorber während des Produktionstaktes entnommene Menge $M_A(t)$ des Produktgases bestimmt. Der Produktionstakt wird beendet, wenn die Menge $M_A(t)$ größer oder gleich einer vorgegebenen Menge $M_{Design}$ ist, wobei $M_A(t)$ aus der dem Produktpuffer entnommenen Menge $Q(t)$ und dem Druckverlauf im Produktpuffer berechnet wird.

Während des Produktionstaktes strömt somit Produktgas, bestehend im Wesentlichen aus der weniger stark adsorbierenden Komponente, in den Produktpuffer. Gleichzeitig wird dem Produktpuffer eine bestimmte, unter Umständen auch schwankende, Menge entnommen und einem Verbraucher zugeführt. Diese entnommene Menge des Produktgases wird, beispielsweise mittels einer dem Produktpuffer nachgeordneten Mengenmesseinrichtung, gemessen. Aus dieser entnommenen Produktmenge und dem Druckverlauf im Produktpuffer, welcher beispielsweise mittels einer dem Produktpuffer nachgeordneten Druckmesseinrichtung gemessen wird, wird eine Menge $M_A(t)$ ermittelt, die dem Adsorber entnommen und dem Produktpuffer während des Produktionstaktes zugeführt wurde. Überschreitet die dem Adsorber entnommene Menge $M_A(t)$ einen bestimmten (für die Größe der Anlage typischen) Wert $M_{Design}$ wird das Abströmen von Produktgas in den Produktpuffer und die Einleitung von Feedgas in den Adsorber beendet.

In einer Ausführungsform erfolgt die Bestimmung der Menge $M_A(t)$ gemäß der folgenden Formel

$$M_A(t) = \int_0^t Q(t)\,dt + M_P(0)\left\{\left(\frac{P(t)}{P(0)}\right)^{\frac{1}{\kappa}} - 1\right\}$$

berechnet wird, wobei

-    t die Zeit seit Beginn des Produktionstaktes in Sekunden ist,
-    $M_A(t)$ die dem Adsorber seit Beginn des Produktionstaktes entnommene Menge in kg ist,
-    $Q(t)$ die aus dem Produktpuffer während des Produktionstaktes entnommenen Menge in kg ist,
-    $M_p(0)$ die Menge an Produktgas in kg im Puffer zu Beginn des Produktionstaktes ist, wobei $M_p(0)$ gemäß der folgenden Formel

$$M_p(0) = V * \rho(t=0),$$

berechnet wird, wobei

- V das Volumen des Produktpuffers in m$^3$ ist, und
- $\rho$ die Dichte des Produktgases im Puffer in kg/m$^3$ bei t = 0 ist,

- P(t) der Druck im Produktpuffer zur Zeit t in bar ist,
- P(0) der Druck im Produktpuffer zur Zeit t = 0 in bar ist, und
- K jede reelle Zahl von 1 bis 1.4 ist.

Alle Werte, die mit der Einheit bar bezeichnet werden, beziehen sich auf den absoluten Druck (bar absolut). Dabei ist K unter isothermen Bedingungen 1 und unter adiabatischen Bedingungen 1.4. Je nach vorliegenden Bedingungen innerhalb der Druckwechseladsorptionsanlage erfolgt eine Anpassung von K an die realen Bedingungen, so dass K aus einem Bereich von 1 bis 1.4 ausgewählt wird.

Insbesondere ist der Faktor K abhängig vom Grad der Wärmeisolation des Behälters des Produktpuffers und der Größe des verwendeten Puffers. Ein sehr großer, isolierter Puffer weist somit Werte im Bereich von 1.4 auf, wohingegen ein kleiner, nicht isolierter Puffer Werte aufweist, die näher bei 1 liegen.

Obige Gleichung ermöglicht eine Bestimmung der aus dem Adsorber entnommenen Menge mittels ohnehin in der Anlage vorhandenen Druckmesseinrichtungen und Mengenmesseinrichtungen am Produktpuffer. Weitere Messeinrichtungen, insbesondere Mengenmesseinrichtungen am Adsorber sind nicht notwendig. Die Anlage wird somit einfacher und weniger störanfällig. Die Auswertung der über die Mengenmesseinrichtung und Druckmesseinrichtung ermittelten Daten kann über eine mit diesen verbundene Steuer-und Regelungseinrichtung erfolgen, welche ein Impulssignal an das Feedgasventil und das Produktventil sendet, wenn $M_A(t)$ größer oder gleich einer vorgegebenen Menge $M_{Design}$ ist. Das Feedgasventil und das Produktventil werden daraufhin geschlossen und somit der Produktionstakt beendet.

Die Auswertung der über die Messeinrichtung ermittelten Daten kann über eine damit verbundene Steuer-und Regelungseinrichtung erfolgen, welche ein Impulssignal an das Feedgasventil und das Produktventil sendet, wenn an der durch die Messeinrichtung vorgegebenen Position die Beladungsfront detektiert wird. Alternativ kann die Steuer- und Regelungseinrichtung ein Impulssignal senden, wenn nach der Detektion der Beladungsfront ein vordefinierter Zeitraum verstrichen ist.

In einer Ausführungsform weist das Verfahren einen Leerlauftakt vor dem Arbeitszyklus auf. Im Leerlauftakt kann Produktgas aus dem Produktpuffer entnommen werden. Die Länge des Leerlauftaktes ist abhängig vom Lastfall, also der dem Produktpuffer entnommenen Menge. Bei 100% Last ist die Länge praktisch Null und nach Beendigung eines Arbeitszyklus folgt direkt ein neuer Arbeitszyklus. Bei einer geringeren Entnahme von Produktgas wird ein erneuter Arbeitszyklus für eine bestimmte Zeit ausgesetzt, erst anschließend beginnt ein neuer Arbeitszyklus und neues Produktgas wird in den Produktpuffer geleitet. Die Zeitdauer dieses Leerlauftaktes kann auf verschiedene Weisen bestimmt werden.

Beispielsweise kann die Zeitdauer aus einem Vergleich der aktuell abgenommenen Menge mit einer angenommenen Designmenge der Anlage bestimmt werden. Nach Erreichen der Designmenge wird der Leerlauftakt beendet. Eine andere Methode besteht darin, mittels des Druckverlaufs im Produktpuffer und der dem Produktpuffer entnommenen Menge den Zeitpunkt vorauszuberechnen, an dem ein vorgegebener Minimaldruck im Puffer unterschritten würde. Es wird der Leerlauftakt dann so rechtzeitig beendet, dass der Produktpuffer vor Unterschreiten des Minimaldrucks wieder mit neuem Produkt gefüllt wird. Dabei ist zu berücksichtigen, dass nach Beendigung des Leerlauftaktes nicht unmittelbar wieder Produkt in den Puffer strömen kann, da zunächst einmal der Adsorber wieder den Pufferdruck erreichen muss.

In einer Ausführungsform weist der Arbeitszyklus vor dem Produktionstakt einen Druckaufbautakt auf. Dabei erfolgt der Druckaufbau in dem Adsorber durch ein Einleiten des Feedgases in den Adsorber. Das Feedgas kann beispielsweise aus einem Feedgasverdichter über ein geeignetes Gasleitungssystem mittels Öffnen eines daran angeordneten Ventils (Feedgasventil) in den Adsorber geleitet werden. Der Druckaufbau wird beendet, wenn der Druck im Adsorber größer oder gleich dem Druck im Produktpuffer ist. Es erfolgt dann ein Übergang in den Produktionstakt. Die Einleitung des Feedgases erfolgt an einer Seite des Adsorbers, beispielsweise der unteren Seite des Adsorbers, (Feedgaseinleitung), die einer weiteren Seite des Adsorbers, beispielsweise der "oberen" Seite des Adsorbers, gegenüberliegt (Produktgasaustritt), so dass das eingeleitete Feedgas (Rohprodukt) die gesamte Länge des Adsorbers durchlaufen muss, um den Produktgasaustritt zu erreichen.

Im Produktionstakt erfolgt eine Überleitung von Produktgas aus dem wenigstens einen Adsorber in einen Produktpuffer. Das Produktgas kann beispielsweise aus dem Adsorber am Produktaustritt über ein geeignetes Gasleitungssystem mittels Öffnen eines daran angeordneten Ventils (Produktventil) in den Produktpuffer geleitet werden. Das Feedgasventil ist während des Produktionstaktes weiterhin geöffnet. Die Beendigung des Druckaufbaus erfolgt somit durch das Öffnen des Produktventils. Dadurch strömt Feedgas von einer Seite (Feedgaseinleitung) in den Adsorber ein und auf der gegenüberliegenden Seite (Produktaustritt) strömt Produktgas aus dem Adsorber ab, wodurch sich der Druckanstieg in der Regel verlangsamt.

In einer Ausführungsform weist der Arbeitszyklus nach dem Produktionstakt einen Gleichstrom-Entspannungstakt auf, d. h. eine Entspannung in die gleiche Richtung wie das Feedgas den Adsorber durchströmt. Dabei erfolgt eine Entspannung des Adsorbers mittels eines Druckausgleiches im Gleichstrom in einen Druckpuffer. Der Druckpuffer umfasst eine Vorrichtung, die geeignet ist teilgereinigtes Produktgas bei einem vorgegeben Druck aufzunehmen, wobei der Druckpuffer über ein geeignetes Gasleitungssystem mit dem Adsorber verbunden ist, insbesondere ist das Gasleitungssystem am Produktaustritt angeordnet. Im Entspannungstakt wird die Zuleitung des Feedgases in den Adsorber und das Abströmen des Produktgases aus dem Adsorber unterbrochen (der Produktionstakt wurde beendet) und ein Ventil (Entspannungsventil), welches an dem Gasleitungssystem zwischen dem Druckpuffer und dem Adsorber angeordnet ist, wird geöffnet. Vor dem Öffnen des Entspannungsventils weist der Adsorber einen größeren Druck als der Druckpuffer auf. Nach dem Öffnen des Entspannungsventils strömt somit teilgereinigtes Produktgas in den Druckpuffer, wobei der Druck im Druckpuffer steigt und im Adsorber sinkt. Im Fall einer Verwendung mehrerer Adsorber kann eine Entspannung auch über eine Verbindung mit einem benachbarten Adsorber erfolgen, wobei der Druck im benachbarten Adsorber bei der Entspannung des ersten Adsorbers ansteigt.

In einer Ausführungsform weist der Arbeitszyklus nach dem Gleichstrom-Entspannungstakt einen Regenerationstakt auf. Der Entspannungstakt wird durch ein Schließen des Entspannungsventils beendet. Es kann eine Regeneration des Adsorbers mittels eines Entspannens im Gegenstrom zur Atmosphäre über ein Gasableitungssystem, welches insbesondere an der dem Produktaustritt gegenüberliegenden Seite des Adsorbers (Feedgaseinleitung) angeordnet ist, erfolgen. Durch das Öffnen eines Ventils (Abgasventil) an diesem Gasableitungssystem strömt Gas, welches einen hohen Anteil der abzutrennenden Komponente aufweist, aus dem Adsorber (Abgas). Der Druckausgleich mit der Atmosphäre ermöglicht, dass auch adsorbierte Komponenten sich "lösen" und als Abgas abgeleitet werden, so dass der Adsorber regeneriert wird und für eine erneute Abtrennung zur Verfügung steht.

Alternativ oder zusätzlich kann zur Regenerierung auch ein Spülgasstrom eingesetzt werden. Der Spülgasstrom besteht insbesondere aus teilgereinigtem Produktgas und wird insbesondere an der Stelle des Produktaustritts in den Adsorber eingeleitet. Durch den Spülgasstrom wird der Partialdruck der abzutrennenden Komponente in der Gasphase reduziert und so die Desorption unterstützt. Der Spülgasstrom kann beispielsweise aus einer Spülgasvorrichtung, aus dem Druckpuffer oder, im Fall einer Verwendung mehrerer Adsorber, aus einem benachbarten Adsorber bereitgestellt werden. Bei der Verwendung eines Spülgases aus dem Druckpuffer oder einem benachbarten Adsorber (siehe die späteren Erläuterungen) kann der Spülgasstrom durch eine (zumindest teilweise) Öffnung des Gleichstrom-Entspannungsventils bereitgestellt werden.

Alternativ oder zusätzlich kann die Regenerierung bei einem Druck unterhalb des Umgebungsdrucks durch Evakuierung des Adsorbers mit Hilfe einer Vakuumpumpe erfolgen.

In einer Ausführungsform weist der Arbeitszyklus nach dem Regenerationstakt einen Gegenstrom-Bespannungstakt auf. Dabei wird der Adsorbers mit Rohprodukt, insbesondere mit teilgereinigtem Produktgas, im Gegenstrom, also entgegengesetzt zur Feedgasrichtung, bespannt, wobei sich der Druck im Adsorber erhöht.

In einer Ausführungsform erfolgen eine Druckerhöhung im Adsorber und eine Bespannung des Adsorbers mit teilgereinigtem Rohprodukt aus einem Druckpuffer. Dabei wird ein geeignetes Ventil (insbesondere das Entspannungsventil) an einem Gasleitungssystems, welches zwischen dem Druckpuffer und Adsorber angeordnet ist, geöffnet, wobei das Abgasventil der Gasableitung geschlossen ist. Nach der Regeneration weist der Druckpuffer einen höheren Druck auf als der Adsorber. Dadurch strömt teilgereinigtes Produktgas, welches beispielsweise im Entspannungstakt in den Druckpuffer geleitet wurde, in den Adsorber.

In einer Ausführungsform umfasst der Arbeitszyklus in der Reihenfolge der Aufzählung einen Druckaufbautakt mit Feedgas, einen Produktionstakt, einen Gleichstrom-Entspannungstakt, einen Regenerationstakt und einen Gegenstrom-Bespannungstakt, wobei vor Beginn eines Taktes der vorherige Takt beendet wird, und wobei insbesondere zwischen zwei Arbeitszyklen, also vor dem Druckaufbautakt und nach dem Gegenstrom-Bespannungstakt, ein Leerlauftakt vorgesehen ist.

In einer Ausführungsform umfasst die Druckwechseladsorptionsanlage wenigstens zwei Adsorber, wobei der Arbeitszyklus vor dem Produktionstakt einen Druckaufbautakt aufweist. Dabei erfolgt der Druckaufbau in einem ersten Adsorber durch Einleiten des Feedgases (erstes Feedgasventil geöffnet) in den ersten Adsorber, wobei gleichzeitig in einem zweiten Adsorber ein Regenerationstakt ausgeführt wird (zweites Abgasventil geöffnet). Die Regenerierung kann durch ein Entspannen im Gegenstrom zur Atmosphäre erfolgen. Alternativ oder zusätzlich kann ein Spülgasstrom verwendet werden. Weiterhin kann die Regenerierung auch mittels einer Evakuierung erfolgen. Selbstverständlich ist eine zusätzliche Evakuierung im Anschluss an die eben beschriebenen Alternativen ebenfalls möglich.

In einer Ausführungsform weist der Arbeitszyklus einen Produktionstakt auf, in dem Produktgas aus einem ersten Adsorber in den Produktpuffer geleitet wird (erstes Produktventil geöffnet), wobei gleichzeitig in einem zweiten Adsorber ein Regenerationstakt ausgeführt wird (zweites Abgasventil geöffnet). Hinsichtlich des Ablaufs der Regenerierung wird auf die vorherigen Absätze verwiesen. Dabei wird der Produktionstakt im ersten Adsorber beendet, wenn die aus dem ersten Adsorber während des Produktionstaktes entnommene Menge $M_A(t)$ des Produktgases größer oder gleich einer vorgegebenen Menge $M_{Design}$ ist. Hinsichtlich der Bestimmung der entnommenen Menge $M_A(t)$ wird auf die vorangegangenen Absätze verwiesen.

Der Regenerationstakt kann mit der Beendigung des Produktionstaktes beendet werden oder alternativ noch für einen gewissen Zeitraum weiter ausgeführt werden. Beispielsweise wird der Regenerationstakt ausgeführt bis ein bestimmter Regenerierdruck erreicht ist (insbesondere bei VPSA-Anlagen), der zweite Adsorber mit einer vorgegebenen Spülgasmenge beaufschlagt wurde oder eine vorgegebene Mindestregenerierzeit erreicht ist.

In einer Ausführungsform weist der Arbeitszyklus nach dem Produktionstakt einen Gleichstrom - Entspannungstakt auf. Dabei erfolgt die Entspannung des Adsorbers mittels eines Druckausgleiches mit einem zweiten Adsorber (siehe die vorherigen Erläuterungen).

In einer Ausführungsform umfasst der Arbeitszyklus in der Reihenfolge der Aufzählung

- einen Gleichstrom - Druckaufbautakt mit Feedgas in einem ersten Adsorber, wobei gleichzeitig in einem zweiten Adsorber ein Regenerationstakt ausgeführt wird,
- einen Produktionstakt in dem ersten Adsorber, wobei gleichzeitig in dem zweiten Adsorber ein Regenerationstakt ausgeführt wird,
- einen Gleichstrom - Entspannungstakt in dem ersten Adsorber und einen gleichzeitigen Gegenstrom- Druckaufbautakt in dem zweiten Adsorber, wobei Entspannung und Druckaufbau durch einen Druckausgleich zwischen dem ersten Adsorber (Druck sinkt) und zweiten Adsorber (Druck steigt) erfolgen,
- einen Regenerationstakt in dem ersten Adsorber, wobei gleichzeitig in einem zweiten Adsorber ein Gleichstrom - Druckaufbautakt mit Feedgas ausgeführt wird,
- einen Regenerationstakt in dem ersten Adsorber, wobei gleichzeitig in einem zweiten Adsorber ein Produktionstakt ausgeführt wird,
- einen Gegenstrom - Druckaufbautakt in dem ersten Adsorber und einen gleichzeitigen Gleichstrom-Entspannungstakt in dem zweiten Adsorber, wobei Entspannung und Druckaufbau durch einen Druckausgleich zwischen dem ersten Adsorber (Druck steigt) und zweiten Adsorber (Druck sinkt) erfolgen,
- einen Leerlauftakt, insbesondere zwischen zwei Arbeitszyklen, also vor dem Druckaufbautakt des ersten Adsorbers und dem Entspannungstakt des zweiten Adsorbers.

Das erfindungsgemäße Verfahren ermöglicht es, ein Überfahren der Adsorber zu verhindern, ohne dass dazu ein Regelventil notwendig ist. Weil es die dem Adsorber entnommene Menge begrenzt, verhindert es auch, dass während der Startphase, wenn der Produktpuffer noch nicht sein normales Druckniveau erreicht hat, Verunreinigungen in den Puffer gelangen. Weiterhin wird ermöglicht, dass dem Puffer ohne Verschlechterung der Reinheit des Produkts auch eine Produktmenge oberhalb der Designmenge entnommen werden kann und somit kurzzeitige Bedarfsspitzen besser abgedeckt werden. Regelungs- oder Messvorrichtungen der Produktgasmenge zwischen Adsorber und Produktpuffer sind dafür erfindungsgemäß nicht notwendig. Die Feedgas-Zufuhr wird während des Produktionstaktes erfindungsgemäß nicht unterbrochen.

Beispielsweise sei die Designmenge auf einen Wert von 1000 festgelegt und die abgenommene Menge schwanke sekündlich zwischen 900 und 1100 (wobei der Mittelwert von 1000 eingehalten wird). Ein Regelventil nach dem Puffer würde somit ständig ansprechen und damit letztlich verhindern, dass tatsächlich im Mittel 1000 geliefert werden. Wird dagegen erfindungsgemäß die Menge in den Puffer berücksichtigt, dann spielen derartige Schwankungen keine Rolle, so dass der Produktionstakt tatsächlich erst nach Erreichen der Designmenge beendet wird, die Menge zum Verbraucher zu keinem Zeitpunkt begrenzt ist und der Druck im Puffer auch stabil bleibt (solange der Verbraucher im Mittel nur 1000 abnimmt).

Insbesondere ermöglicht das erfindungsgemäße Verfahren bei einer Verwendung von mehreren Adsorbern eine gleichmäßige Nutzung aller Adsorber. Eventuelle Kapazitätsunterschiede zwischen den Adsorbern können durch separate Sollwerte berücksichtigt werden.

Das erfindungsgemäße Verfahren eignet sich ebenfalls für Druckwechseladsorptionsanlagen, welche mehr als zwei Adsorber aufweisen. Ein weiterer Aspekt der Erfindung ist eine Druckwechseladsorptionsanlage gemäß den Merkmalen des Anspruchs 9, die insbesondere geeignet ist das Verfahren gemäß den Merkmalen der Ansprüche 1 bis 8 durchzuführen.

In einer Ausführungsform umfasst die Druckwechseladsorptionsanlage wenigstens einen Adsorber zur Abtrennung einer stärker adsorbierenden Komponente aus einem Rohprodukt, wobei der Adsorber eine mittels eines Feedgasventils verschließbare Feedgaseinleitung und eine mittels eines Produktventils verschließbare Produktgasableitung aufweist. Weiterhin umfasst die Druckwechseladsorptionsanlage einen Produktpuffer zur Aufnahme von gereinigtem Produktgas aus dem Adsorber über die Produktgasableitung, eine Mengenmesseinrichtung zur Bestimmung der dem Produktpuffer entnommene Menge und eine Druckmesseinrichtung zur Bestimmung des Drucks im Produktpuffer. Dabei weist die Druckwechseladsorptionsanlage ein Steuer-und Regelungseinrichtung auf, die geeignet ist, die Messwerte der Druckmesseinrichtung und der Mengenmesseinrichtung aufzunehmen, zu verarbeiten und auf Basis dieser Werte eine Zeitpunkt zur Beendigung der Feedgaseinleitung und der Produktgasableitung zu ermitteln, wobei die Steuer-und Regelungseinrichtung ausgebildet ist, bei Vorliegen dieses Zeitpunkts einen Steuerimpuls an das Feedgasventil und das Produktventil zu senden. In der erfindungsgemäßen Ausgestaltung erfolgt ein Produktionstakt bei einer geöffneten Feedgaseinleitung und Produktgasableitung, so dass bei Verschluss der Feedgaseinleitung und der Produktgasableitung der Produktionstakt beendet wird.

Die Steuer- und Regelungseinrichtung ermittelt die aus dem wenigstens einen Adsorber während des Produktionstaktes entnommene Menge $M_A(t)$ des Produktgases. Die Ermittlung erfolgt mittels der dem Produktpuffer entnommenen Menge $Q(t)$, welche durch die Mengenmesseinrichtung ermittelt wird, und dem Druckverlauf im Produktpuffer, welche mittels der Druckmesseinrichtung ermittelt wird. Dabei kann die Menge $M_A(t)$ insbesondere gemäß der folgenden Formel

$$M_A(t) = \int_0^t Q(t')dt' + M_p(0)\left\{ \left(\frac{P(t)}{P(0)}\right)^{\frac{1}{k}} - 1 \right\}$$

berechnet werden. Die Steuer-und Regelungseinrichtung sendet ein Impulssignal an das Feedgasventil und das Produktventil wenn $M_A(t)$ größer oder gleich einer vorgegebenen Menge $M_{Design}$ ist. Das Feedgasventil und das Produktventil werden daraufhin geschlossen und somit der Produktionstakt beendet.

In einer anderen Ausführungsform umfasst die Druckwechseladsorptionsanlage, wenigstens einen Adsorber zur Abtrennung einer stärker adsorbierenden Komponente aus einem Rohprodukt, wobei der Adsorber eine mittels eines Feedgasventils verschließbare Feedgaseinleitung und eine mittels eines Produktventils verschließbare Produktgasableitung aufweist. Dabei weist die Druckwechseladsorptionsanlage in dem Adsorber in einer vorgegebenen Lage eine Messvorrichtung zur Messung einer zeitlichen Veränderung von physikalischen Parametern auf.

Es ist festzustellen, dass die Druckwechseladsorptionsanlage insbesondere einen Produktpuffer, einen Druckpuffer, einen Feedgasverdichter, eine Vakuumapparatur, weitere parallelgeschaltete Adsorber aufweisen kann, die alle, je nach Bedarf, mit jeweils einem Gasleitungssystem miteinander verbunden sein können, wobei jedes Gasleitungssystem über wenigstens ein Ventil verfügen kann. Derartige Ausgestaltungen sind dem Fachmann geläufig. Insbesondere weist die Druckwechseladsorptionsanlage die oben hinsichtlich des Verfahrens beschriebenen Komponenten und die in der Figurenbeschreibung erläuterten Komponenten auf.

Die Messvorrichtung ermöglicht die abgenommene Produktmenge zu begrenzen, ohne dass dafür ein Regelventil vor oder nach einem Produktpuffer nötig wäre, ein Überfahren der Anlage sicher zu verhindern und eine Verunreinigung des Produktpuffers während instationärer Phasen zu vermeiden.

Weitere Einzelheiten und Vorteile der Erfindung sollen durch die nachfolgenden Figurenbeschreibungen von Ausführungsbeispielen anhand der Figuren erläutert werden.

Es zeigen:

Fig. 1     beschreibt die Verwendung des erfindungsgemäßen Verfahrens in einer Ein-Adsorber-Anlage, und

Fig. 2     beschreibt die Verwendung des erfindungsgemäßen Verfahrens in einer Zwei-Adsorber-Anlage.

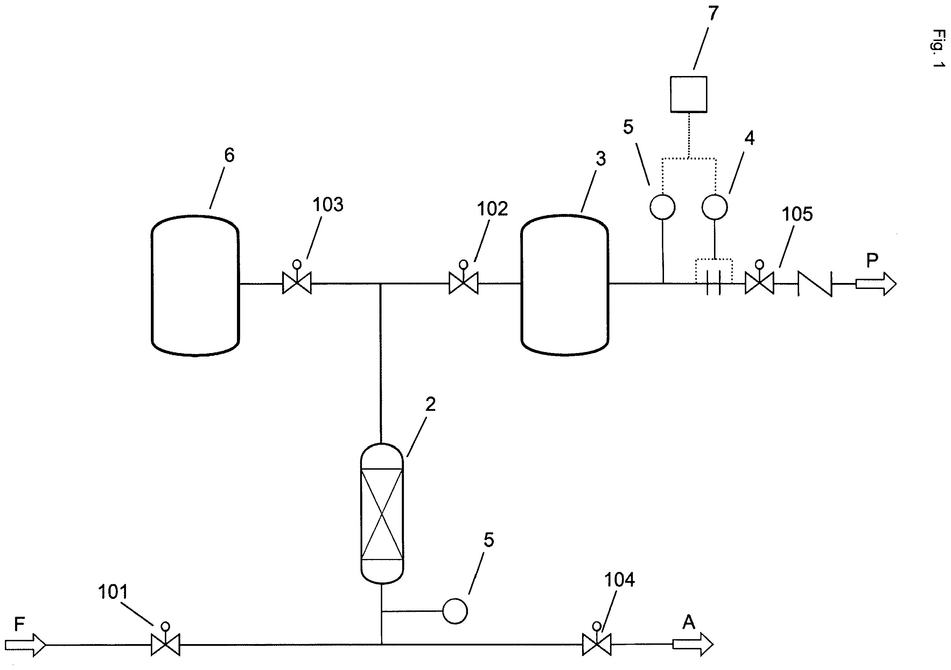

Die Figur 1 zeigt eine schematische Abbildung einer Ein-Adsorber-Anlage, welche geeignet ist, das erfindungsgemäße Verfahren durchzuführen.

Die Druckwechseladsorptionsanlage 1 umfasst einen Adsorber 2, einen Produktpuffer 3, einen Druckpuffer 6, eine Mengenmesseinrichtung 4, zwei Druckmesseinrichtungen 5, ein Feedgasventil 101, ein Produktventil 102, ein Entspannungsventil 103, ein Abgasventil 104 und ein Entnahmeventil 105.

Die Mengenmesseinrichtung 4 ermöglicht die Bestimmung der aus dem Produktpuffer 3 entnommenen Menge an Produktgas P. Die Druckmesseinrichtungen 5 ermöglichen eine Bestimmung des Drucks in dem Adsorber 2 beziehungsweise in dem Produktpuffer 3.

Das Verfahren weist vorliegend einen Arbeitszyklus auf, der einen Druckaufbautakt, einen Produktionstakt, einen Entspannungstakt, einen Regenerationstakt und einen Bespannungstakt umfasst, wobei zwischen zwei Arbeitszyklen, also vor dem Druckaufbautakt und nach dem Bespannungstakt, ein Leerlauftakt vorgesehen ist. Das Verfahren lässt sich somit in sechs Schritte unterteilen.

In einem ersten Schritt liegt ein Leerlauftakt vor. Die Ventile 101 bis 104 sind geschlossen, das Entnahmeventil 105, welches nach dem Produktpuffer angeordnet ist, ist offen. Über das Entnahmeventil 105 ist es möglich, dass ein Verbraucher (über eine hier aus Gründen der Übersichtlichkeit nicht dargestellte Abnahmevorrichtung) Produktgas P aus dem Produktpuffer 3 entnehmen kann. Das Entnahmeventil 105 ist vorliegend während des Leerlauftaktes und des Arbeitszyklus geöffnet.

Die Zeitdauer des Leerlauftaktes wird durch die abgenommene Menge bestimmt. Beispielsweise wird er Leerlauftakt beendet bevor ein bestimmter Minimaldruck im Produktpuffer 3 unterschritten wird. Es erfolgt ein so rechtzeitiger Übergang in den Arbeitszyklus, dass der Produktpuffer 3 vor Unterschreiten dieses Drucks wieder mit neuem Produkt gefüllt wird. Alternativ kann die Zeitdauer des Leerlauftaktes auch aus der aktuell abgenommenen Menge im Vergleich zu einer angenommenen Designmenge der Anlage bestimmt werden. Bei einer geringeren Entnahme von Produktgas P wird ein erneuter Arbeitszyklus solange ausgesetzt bis eine vorgegebene Menge an Produktgas aus dem Produktpuffer entnommen wurde, so dass anschließend der Beginn eines neuen Arbeitszyklus einsetzt und neues Produktgas P in den Produktpuffer 3 geleitet wird. Bei 100% Last ist die Länge dieses Taktes praktisch Null und nach Beendigung eines Arbeitszyklus folgt direkt ein weiterer Arbeitszyklus.

In einem zweiten Schritt umfasst der Arbeitszyklus einen Druckaufbautakt. Dabei erfolgt der Druckaufbau in dem Adsorber 2 mittels eines Einleitens von Feedgas F über das nun geöffnete Feedgasventil 101 in den Adsorber 2 (Druckaufbau im Gleichstrom). Die Ventile 102 bis 104 sind weiterhin geschlossen. Der Druckaufbau wird beendet, wenn der Druck im Adsorber 2 größer oder gleich dem Druck im Produktpuffer 2 ist. Es erfolgt dann ein Übergang in den Produktionstakt (Schritt 3).

In einem dritten Schritt befindet sich die Anlage in einem Produktionstakt. Der zweite Schritt (Druckaufbautakt) wird durch ein Öffnen des Produktventils 102, welches eine Zuführung von Produktgas aus dem Adsorber 2 in den Produktpuffer 3 ermöglicht, beendet und der Produktionstakt begonnen. Das Feedgasventil 101 und das Produktventil 102 sind somit während des Produktionstaktes geöffnet. Die Ventile 103 und 104 sind geschlossen. Im Produktionstakt fließt somit Feedgas F über das Feedgasventil 101 in den Adsorber 2 und Produktgas P über das Produktventil 102 in den Produktpuffer 3.

Der Produktionstakt wird so lange ausgeführt, bis die Rückhaltekapazität des Adsorbers 2 für die abzutrennende Komponente oder die abzutrennenden Komponenten erschöpft ist. Es erfolgt eine Beendigung des Produktionstaktes wenn die aus dem wenigstens einen Adsorber während des Produktionstaktes entnommene Menge $M_A(t)$ des Produktgases größer oder gleich einer vorgegebenen Menge $M_{Design}$ ist, wobei die Menge $M_A(t)$ aus der dem Produktpuffer entnommenen Menge $Q(t)$ und dem Druckverlauf im Produktpuffer berechnet wird. Dabei wird die Menge $M_A(t)$ gemäß der folgenden Formel

$$M_A(t) = \int_0^t Q(t')dt' + M_p(0)\left\{\left(\frac{P(t)}{P(0)}\right)^{\frac{1}{\kappa}} - 1\right\}$$

berechnet. Hinsichtlich der Bedeutung der einzelnen Abkürzungen wird auf die Beschreibung verwiesen.

Die Auswertung der über die Mengenmesseinrichtung und Druckmesseinrichtung ermittelten Daten erfolgt über eine mit diesen verbundene Steuer-und Regelungseinrichtung (8), welche ein Impulssignal an das Feedgasventil und das Produktventil sendet, wenn $M_A(t)$ größer oder gleich einer vorgegebenen Menge $M_{Design}$ ist. Das Feedgasventil und das Produktventil werden daraufhin geschlossen und somit der Produktionstakt beendet.

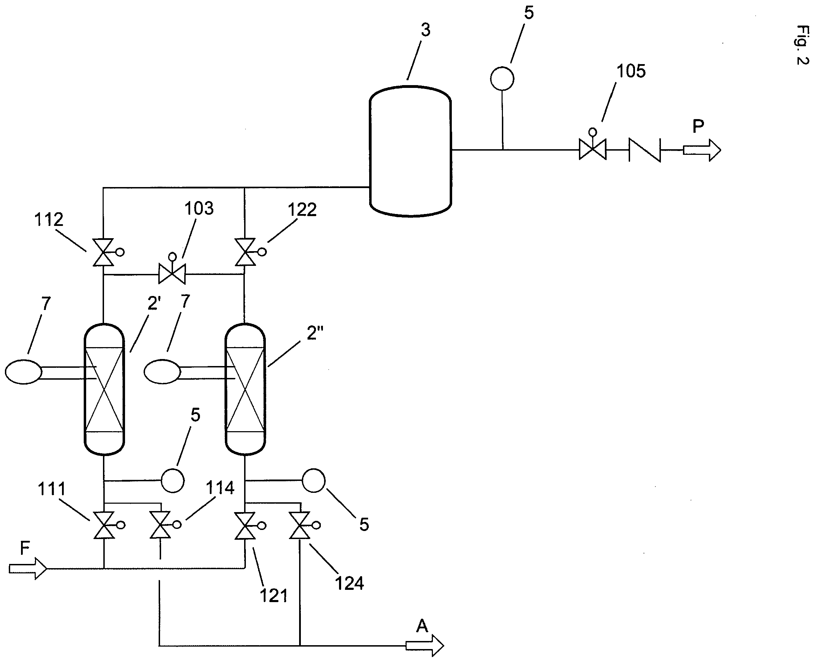

Alternativ kann eine Beendigung des Produktionstaktes auch erfolgen, wenn das Erreichen einer vorgegebene Endlage (Position der Messeinrichtung entspricht der vorgegebenen Endlage) oder einer vorgegebenen Lage (Position der Messeinrichtung) durch die Beladungsfront in dem wenigstens einen Adsorber 2 detektiert wird, wobei bei der Detektion in der vorgegebenen Lage der Produktionstakt noch für einen bestimmten Zeitpunkt weiter ausgeführt wird. Es wird auf die vorangegangenen Erläuterungen und die Erläuterungen zu Figur 2 verwiesen.

Der Produktionstakt wird durch Schließen des Feedgasventils 101 und des Produktventils 102 beendet.

Nach Beendigung des Produktionstaktes wird in einem vierten Schritt ein Gleichstrom - Entspannungstakt ausgeführt. Das Entspannungsventil 103 ist geöffnet. Das Feedgasventil 101, das Produktgasventil 102 und das Abgasventil 104 sind geschlossen. Dabei erfolgt eine Entspannung des Adsorbers 2 mittels eines Druckausgleiches mit einem Druckpuffer 6, der über das Entspannungsventil 103 mit dem Adsorber 2 verbunden ist. Der Druckpuffer 6 weist vor der Entspannung einen niedrigeren Druck als der Adsorber 2 auf. Durch die Entspannung gelangt teilgereinigtes (bzw. nahezu reines) Rohprodukt in den Druckpuffer 6. Nach Erreichen eines vorgegebenen Drucks oder einer vorgegeben Zeit wird der Entspannungstakt durch Schließen des Entspannungsventils 103 beendet.

Nach Beenden des Entspannungstakts wird in einem fünften Schritt ein Regenerationtakt ausgeführt. Das Feedgasventil 101, das Produktgasventil 102 und das Entspannungsventil 103 sind geschlossen. Das Abgasventil 104 ist geöffnet. Dabei erfolgt die Regeneration des Adsorbers 2 mittels eines Entspannens im Gegenstrom zur Atmosphäre, so dass mit der abzutrennenden Komponente angereichertes Abgas A aus dem Adsorber 2 geleitet wird. Alternativ kann die Regenerierung durch einen Spülgasstrom unterstützt werden. Der Spülgasstrom kann beispielsweise durch eine gedrosselte Öffnung des Produktventils 102 und/oder des Entspannungsventils 103 bereitgestellt werden. Alternativ ist auch eine Einleitung von Spülgas aus einem Spülgasreservoir möglich. In einem VSPA-Verfahren umfasst dieser Schritt auch die Evakuierung mit Vakuum. Nach Erreichen eines vorgegebenen Drucks oder einer vorgegeben Zeit wird der Regenerationstakt durch Schließen des Abgasventils 104 (und ggf. der Ventile des Spülgasstroms oder der Vakuumeinrichtung) beendet.

Im Anschluss an den Regenerationstakt wird in einem sechsten Schritt ein Gegenstrom - Bespannungstakt ausgeführt. Eine Bespannung erfolgt im vorliegenden Fall über den Druckpuffer 6, der einen höheren Druck als der Adsorber 2 aufweist. Das Entspannungsventil 103 ist geöffnet. Das Feedgasventil 101, das Produktgasventil 102 und das Abgasventil 104 sind geschlossen. Dadurch erfolgt eine Druckerhöhung im Adsorber 2 und eine Bespannung des Adsorbers 2 mit teilgereinigtem Rohprodukt aus dem Druckpuffer 6. Nach Erreichen eines vorgegebenen Drucks oder einer vorgegeben Zeit wird der Bespannungstakt beendet. Die Anlage geht über in den Leerlauftakt (Schritt 1). Das Verfahren beginnt somit erneut.

Die einzelnen Schritte werden in der folgenden Tabelle 1 zusammengefasst.

Tabelle 1: X steht für ein geschlossenes Ventil und O für ein geöffnetes Ventil, $P_A$ für den Druck im Adsorber, $P_P$ für den Druck im Produktpuffer.

| Schritt | Takt | 101 | 102 | 103 | 104 | 105 | Beendigung |
|---------|------|-----|-----|-----|-----|-----|------------|
| 1 | Leerlauf | X | X | X | X | O | je nach Lastfall |
| 2 | Druckaufbau | O | X | X | X | O | $P_A \geq P_P$ |
| 3 | Produktion | O | O | X | X | O | $M_A(t) \geq M_{Design}$ |
| 4 | Entspannung | X | X | O | X | O | Zeit- oder Druckkontrolliert |
| 5 | Regenerierung | X | X | X | O | O | Siehe 4 |
| 6 | Bespannung | X | X | O | X | O | Siehe 4 |

Die Figur 2 zeigt eine schematische Abbildung einer Zwei-Adsorber-Anlage, welche geeignet ist, das erfindungsgemäße Verfahren durchzuführen. Hinsichtlich Vorrichtungen und Verfahrensschritte mit einer gleichen Bezeichnung oder Bezugszeichen wird auf die Erläuterungen der Figur 1 verwiesen.

Die Druckwechseladsorptionsanlage 1 der Figur 2 umfasst einen ersten Adsorber 2', einen zweiten Adsorber 2", einen Produktpuffer 3, drei Druckmesseinrichtungen 5, zwei Feedgasventile 111, 121, zwei Produktventile 112, 122, ein Entspannungsventil 103, zwei Abgasventile 114, 124 und ein Entnahmeventil 105. Eine zusätzliche Mengenmessung ist möglich (analog Figur 1).

Das Verfahren weist vorliegend einen Arbeitszyklus auf, der folgende Schritte umfasst:

- einen Gleichstrom - Druckaufbautakt in einem ersten Adsorber 2', wobei gleichzeitig in einem zweiten Adsorber 2" ein Regenerationstakt ausgeführt wird,
- einen Produktionstakt in dem ersten Adsorber 2', wobei gleichzeitig in dem zweiten Adsorber 2" ein Regenerationstakt ausgeführt wird,
- einen Gleichstrom - Entspannungstakt in dem ersten Adsorber 2' und einen gleichzeitigen Gegenstrom - Druckaufbautakt in dem zweiten Adsorber 2", wobei Entspannung und Druckaufbau durch einen Druckausgleich zwischen dem ersten Adsorber 2' (Druck sinkt) und zweiten Adsorber 2" (Druck steigt) erfolgt,
- einen Regenerationstakt in dem ersten Adsorber 2', wobei gleichzeitig in einem zweiten Adsorber 2" ein Gleichstrom-Druckaufbautakt ausgeführt wird,
- einen Regenerationstakt in dem ersten Adsorber 2', wobei gleichzeitig in einem zweiten Adsorber 2" ein Produktionstakt ausgeführt wird,
- einen Gegenstrom - Druckaufbautakt in dem ersten Adsorber 2' und einen gleichzeitigen Gleichstrom - Entspannungstakt in dem zweiten Adsorber 2", wobei Entspannung und Druckaufbau durch einen Druckausgleich zwischen dem ersten Adsorber 2' (Druck steigt) und zweiten Adsorber 2" (Druck sinkt) erfolgt,

wobei insbesondere zwischen zwei Arbeitszyklen, also vor dem Druckaufbautakt des ersten Adsorbers 2' und dem Entspannungstakt des zweiten Adsorbers 2", ein Leerlauftakt vorgesehen ist.

In einem ersten Schritt liegt ein Leerlauftakt vor. Die Ventile 111, 112, 114, 121, 122, 124 und 103 sind geschlossen, das Entnahmeventil 105 ist vorliegend geöffnet. Die Zeitdauer des Leerlauftaktes wird durch die abgenommene Menge bestimmt. Es wird auf die Ausführungen zu Figur 1 verwiesen.

Nach Beendigung des Leerlauftaktes erfolgt ein Übergang in den Arbeitszyklus. In einem zweiten Schritt erfolgt ein Druckaufbautakt in dem ersten Adsorber 2', wobei gleichzeitig in dem zweiten Adsorber 2" ein Regenerationstakt ausgeführt wird. Dabei erfolgt der Druckaufbau in dem ersten Adsorber 2' mittels Einleiten von Feedgas F über das nun geöffnete erste Feedgasventil 111 in den ersten Adsorber 2' Druckaufbau im Gleichstrom). Der zweite Adsorber 2" wird im Gegenstrom zur Atmosphäre über das geöffnete zweite Abgasventil 124 entspannt, Abgas A abgeleitet und somit regeneriert. Die Ventile 121, 122 und 114 sind weiterhin geschlossen. Die Regeneration des zweiten Adsorbers 2" kann durch einen Spülgasstrom aus dem ersten Adsorber 2' unterstützt werden (103 gedrosselt geöffnet). Der Druckaufbau wird beendet, wenn der Druck im ersten Adsorber 2' größer oder gleich dem Druck im Produktpuffer 3 ist. Es erfolgt dann ein Übergang in den Produktionstakt (Schritt 3).

In einem dritten Schritt befindet sich die Anlage in einem Produktionstakt. Das Feedgasventil 111 und das Produktventil 112 des ersten Adsorbers 2' sind geöffnet, die Ventile 121, 122 und 114 geschlossen. Es fließt Feedgas F über das Feedgasventil 111 in den ersten Adsorber 2' und Produktgas P über das Produktgasventil 112 in den Produktpuffer 3. Die Regeneration des zweiten Adsorbers 2" erfolgt weiterhin über das Abgasventil 124 und kann durch eine gedrosselte Öffnung des Entspannungsventils 103 mit einem Spülgasstrom unterstützt werden.

Der Produktionstakt wird so lange ausgeführt, bis die Rückhaltekapazität des ersten Adsorbers 2' erschöpft ist. Eine Beendigung des Produktionstaktes erfolgt, wenn das Erreichen einer entlang der Strömungsrichtung des Feedgases vorgegebenen Endlage (Endlage entspricht der Position der Messeinrichtung) durch die Beladungsfront in dem ersten Adsorber 2' detektiert wird. Alternativ ist es möglich, dass das Erreichen einer vorgegebenen Lage (Position der Messeinrichtung) durch die Beladungsfront detektiert wird und der Produktionstakt des ersten Adsorbers 2' und der Regenerationstakt des zweiten Adsorbers 2" für einen bestimmten Zeitpunkt weiter ausgeführt wird (Schritt 4a).

Die Auswertung der über die Messeinrichtung ermittelten Daten kann über eine mit damit verbundene Steuer- und Regelungseinrichtung (hier nicht dargestellt) erfolgen, welche ein Impulssignal an das entsprechende Feedgasventil (111, 121) und das entsprechende Produktventil (112, 122) sendet, wenn eine Endlage detektiert wurde. Alternativ kann die Steuer-und Regelungseinrichtung ein Impulssignal senden, wenn eine vorgegebene Lage detektiert wurde und ein vordefinierter Zeitraum verstrichen ist. Es wird auf die vorherigen Erläuterungen verwiesen (siehe vorheriger Abschnitt).

Eine Beendigung des Produktionstaktes ist auch denkbar, wenn die aus dem ersten Adsorber 2' während des Produktionstaktes entnommene Menge $M_A(t)$ des Produktgases P größer oder gleich einer vorgegebenen Menge $M_{Design}$ ist. Hinsichtlich einer Bestimmung von $M_A(t)$ wird auf die vorangegangenen Erläuterungen verwiesen.

Der Regenerationstakt kann auch nach Beenden des Produktionstaktes im ersten Adsorber 2' noch weiter ausgeführt werden (Schritt 4b). Der Regernationstakt kann beispielsweise ausgeführt werden, bis ein bestimmter Regenerierdruck im zweiten Adsorber 2"erreicht wird, der zweite Adsorber 2" mit einer vorgegebenen Spülgasmenge beaufschlagt wurde oder eine vorgegebene Mindestregenerierzeit erreicht wird.

Nach Beendigung des Produktionstaktes wird in einem fünften Schritt ein Gleichstrom-Entspannungstakt im ersten Adsorber 2' und ein Gegenstrom-Bespannungstakt im zweiten Adsorber 2" ausgeführt. Das Entspannungsventil 103 ist geöffnet. Die weiteren Ventile (außer Entnahmeventil 105) sind geschlossen. Dabei erfolgt eine Entspannung des ersten Adsorbers 2' mittels eines Druckausgleiches mit dem zweiten Adsorber 2", der über das Entspannungsventil 103 mit dem ersten Adsorber 2' verbunden ist. Nach Erreichen eines vorgegebenen Drucks oder einer vorgegeben Zeit wird der Entspannungstakt im ersten Adsorber 2' und der Bespannungstakt im zweiten Adsorber 2" beendet.

Im sechsten Schritt liegt wieder ein Leerlauftaktvor. Die Ventile 111, 112, 114, 121, 122, 124 und 103 sind geschlossen, das Entnahmeventil 105 ist vorliegend geöffnet. Die Zeitdauer des Leerlauftaktes wird durch die abgenommene Menge bestimmt. Es wird auf die Ausführungen zu Figur 1 verwiesen.

Anschließend erfolgt in einem siebten Schritt ein Druckaufbautakt in dem zweiten Adsorber 2", wobei gleichzeitig in dem erste Adsorber 2' ein Regenerationstakt ausgeführt wird. Vorliegend ist das Feedgasventil 121 zum zweiten Adsorber 2" und das erste Abgasventil 114 des ersten Adsorbers 2' geöffnet. Zur Unterstützung der Regenerierung des ersten Adsorbers 2' kann ein Spülgasstrom aus dem zweiten Adsorber 2" über das Entspannungsventil 103 (gedrosselt geöffnet) in den ersten Adsorber geleitet werden (analog Schritt 2).

In einem achten Schritt befindet sich die Anlage in einem Produktionstakt. Das Feedgasventil 121 und das Produktventil 122 des zweiten Adsorbers 2" sind, vergleichbar dem Schritt 3, geöffnet. Die Ventile 111, 112 und 124 sind geschlossen. Die Regeneration des ersten Adsorbers 2' erfolgt weiterhin über das Abgasventil 114 und kann durch eine gedrosselte Öffnung des Entspannungsventils 103 mit einem Spülgasstrom unterstützt werden.

Dieser Produktionstakt wird so lange ausgeführt, bis die Rückhaltekapazität des zweiten Adsorbers 2"erschöpft ist. Es wird hinsichtlich der Feststellung des Zeitpunkts der Beendigung auf die obigen Ausführungen und die Ausführungen der Figur 1 verwiesen.

Alternativ kann ein dem Schritt 4a analoger Schritt 9a ausgeführt werden, so dass nach der Detektion der Beladungsfront der Produktionstakt noch einen vordefinierten Zeitraum weiter ausgeführt wird. Der Regenerationstakt des ersten Adsorber 2' kann, vergleichbar dem Schritt 4b, auch nach Beenden des Produktionstaktes im zweiten Adsorber 2" noch weiter ausgeführt werden (Schritt 9b). Es wird auf die Ausführungen hinsichtlich der Schritte 4a und 4b verwiesen.

Anschließend wird in einem zehnten Schritt ein Gleichstrom-Entspannungstakt im zweiten Adsorber 2" und ein Gegenstrom-Bespannungstakt im ersten Adsorber 2' ausgeführt. Das Entspannungsventil 103 ist geöffnet. Die weiteren Ventile (außer Entnahmeventil 105) sind geschlossen. Dabei erfolgt eine Entspannung des zweiten Adsorbers 2" mittels eines Druckausgleiches mit dem ersten Adsorber 2' (vergleichbar dem Schritt 5). Nach Erreichen eines vorgegebenen Drucks oder einer vorgegeben Zeit wird der Entspannungstakt im ersten Adsorber 2' und der Bespannungstakt im zweiten Adsorber 2" beendet.

Die Anlage geht anschließend in den Leerlauftakt (Schritt 1) über. Das Verfahren beginnt somit erneut.

Die einzelnen Schritte werden in der folgenden Tabelle 2 zusammengefasst.

| | Takt | 111 | 121 | 112 | 122 | 103 | 114 | 124 | 105 | Beendigung |
|---|---|---|---|---|---|---|---|---|---|---|
| 1 | Leerlauf | X | X | X | X | X | X | X | O | je nach Lastfall |
| 2 | Druckaufbau 2' Regenerierung 2" | O | X | X | X | (O) | X | O | O | $P_A$ (Ad. 2') $\geq P_P$ |
| 3 | Produktion 2' Regenerierung 2" | O | X | O | X | (O) | X | O | O | $\Delta p_M$ (Ad. 2') $\geq \Delta p_{set}$ |
| 4a | Produktion 2' Regenerierung 2" | O | X | O | X | (O) | X | O | O | Zeit- oder Druckkontrolliert |
| 4b | Regenerierung 2" | X | X | X | X | (O) | x | O | O | Siehe 4a |
| 5 | Entspannung 2' Bespannung 2" | X | X | X | X | O | X | X | O | Siehe 4a |
| 6 | Leerlauf | X | X | X | X | X | X | X | O | je nach Lastfall |
| 7 | Regenerierung 2' Druckaufbau 2" | X | O | X | X | (O) | O | X | O | $P_A$ (Ad. 2") $\geq P_P$ |
| 8 | Regenerierung 2' Produktion 2" | X | O | X | O | (O) | O | X | O | $\Delta p_M$ (Ad. 2") $\geq \Delta p_{set}$ |
| 9a | Regenerierung 2' Produktion 2" | X | O | X | O | (O) | O | X | O | Siehe 4a |
| 9b | Regenerierung 2' | X | X | X | X | (O) | O | X | O | Siehe 4a |
| 10 | Bespannung 2' Entspannung 2" | X | X | X | X | O | X | X | O | Siehe 4a |

Tabelle 1: X steht für ein geschlossenes Ventil, O für ein geöffnetes Ventil, (O) für ein gedrosselt geöffnetes Ventil (optional), $P_A$ für den Druck in dem jeweiligen Adsorber, $P_P$ für den Druck im Produktpuffer, $\Delta p_M$ für den durch die Messvorrichtung 7 zur Detektion der Beladungsfront detektierte Druckunterschied, $\Delta p_{set}$ für eine vorgegebenen Wert hinsichtlich des Druckunterschieds und Ad. Für einen Adsorber.

**Bezugszeichenliste**

| | |
|---|---|
| 1 | Druckwechseladsorptionsanlage |
| 101, 111, 121 | Feedgasventil |
| 102, 112, 122 | Produktventil |
| 103 | Entspannungsventil |
| 104, 114, 124 | Abgasventil |
| 105 | Entnahmeventil |
| 2 | Adsorber |
| 2' | erster Adsorber |
| 2" | zweiter Adsorber |
| 3 | Produktpuffer |
| 4 | Mengenmesseinrichtung |
| 5 | Druckmesseinrichtung |
| 6 | Druckpuffer |
| 7 | Messvorrichtung zur Detektion der Beladungsfront |
| 8 | Steuer-und Regelungseinrichtung |
| A | Abgas |

(fortgesetzt)

| F | Feedgas |
|---|---------|
| P | Produktgas |

**Patentansprüche**

1. Verfahren zur Lastanpassung, Mengen- und Reinheitskontrolle einer Druckwechseladsorptionsanlage (1), wobei die Druckwechseladsorptionsanlage (1) einen Arbeitszyklus durchläuft und der Arbeitszyklus wenigstens einen Produktionstakt umfasst, wobei während des Produktionstaktes eine ununterbrochene Zufuhr eines Feedgases (F) in wenigstens einen Adsorber (2) erfolgt und der Zeitpunkt der Beendigung des Produktionstaktes bestimmt wird durch

   - eine Ermittlung der aus dem wenigstens einen Adsorber (2) während des Produktionstaktes entnommene Menge $M_A(t)$ des Produktgases (P), wobei die Beendigung des Produktionstaktes erfolgt, wenn die Menge $M_A(t)$ größer oder gleich einer vorgegebenen Menge $M_{Design}$ ist, und wobei die Menge $M_A(t)$ aus der dem Produktpuffer (3) entnommenen und gemessenen Menge $Q(t)$ und dem Druckverlauf im Produktpuffer (3) berechnet wird, wobei die vorgegebene Menge $M_{Design}$ einer definierte Menge an Produktgas entspricht, die durch die Anlage in einem Arbeitszyklus unter Einhaltung des gewünschten Reinheitsgrades bereitgestellt werden kann, wobei der Produktpuffer eine Vorrichtung ist, die ausgebildet ist Produktgas, zu lagern und einem Verbraucher bei Bedarf zuzuführen.

2. Verfahren zur Lastanpassung, Mengen- und Reinheitskontrolle nach Anspruch 1,
   **dadurch gekennzeichnet, dass** der Produktionstakt beendet wird, wenn $M_A(t) \geq M_{Design}$ ist, wobei die Menge $M_A(t)$ gemäß der folgenden Formel

$$M_A(t) = \int_0^t Q(t')dt' + M_p(0)\left\{\left(\frac{P(t)}{P(0)}\right)^{\frac{1}{\kappa}} - 1\right\}$$

   berechnet wird, wobei

   - t die Zeit seit Beginn des Produktionstaktes in Sekunden ist,
   - $M_A(t)$ die dem Adsorber (2) seit Beginn des Produktionstaktes entnommene Menge in kg ist,
   - $Q(t)$ die aus dem Produktpuffer (3) während des Produktionstaktes entnommenen Menge in kg ist,
   - $M_p(0)$ die Masse im Adsorber (2) zu Beginn des Produktionstaktes ist,

   - wobei $M_p(0)$ gemäß der folgenden Formel

$$M_p(0) = V * \rho(t=0),$$

   berechnet wird, wobei
   - V das Volumen des Produktpuffers (3) in m$^3$ ist, und
   - $\rho$ die Dichte des Produktgases im Puffer in kg/m$^3$ bei t = 0 ist,

   - $P(t)$ der Druck im Produktpuffer (3) zur Zeit t in bar ist,
   - $P(0)$ der Druck im Produktpuffer (3) zur Zeit t = 0 in bar ist, und
   - K jede reelle Zahl von 1 bis 1.4 ist.

3. Verfahren zur Lastanpassung, Mengen- und Reinheitskontrolle nach einem der vorhergehenden Ansprüche, **dadurch gekennzeichnet, dass** vor dem Produktionstakt ein Druckaufbau in dem Adsorber (2) mittels eines Einleitens des Feedgases (F) in den Adsorber (2) erfolgt.

4. Verfahren zur Lastanpassung, Mengen- und Reinheitskontrolle nach Anspruch 3, **dadurch gekennzeichnet, dass** der Druckaufbau im Adsorber (2) beendet wird und ein Übergang in den Produktionstakt erfolgt, wenn der Druck im Adsorber (2) größer oder gleich dem Druck im Produktpuffer (3) ist.

5. Verfahren zur Lastanpassung, Mengen- und Reinheitskontrolle nach einem der vorhergehenden Ansprüche, **dadurch gekennzeichnet, dass** nach Beendigung des Produktionstaktes eine Entspannung des Adsorbers (2) mittels eines Druckausgleiches erfolgt, wobei insbesondere der Druckausgleich mittels einer Entspannung im Gleichstrom in einen Druckpuffer (6) oder der Druckausgleich in einem ersten Adsorber (2') mittels einer Entspannung in einen zweiten Adsorber (2") erfolgt.

6. Verfahren zur Lastanpassung, Mengen- und Reinheitskontrolle nach Anspruch 5, **dadurch gekennzeichnet, dass** nach Beendigung der Entspannung des Adsorbers (2) eine Regenerierung des Adsorbers (2) mittels

   - eines Entspannens im Gegenstrom zur Atmosphäre und/oder
   - einer Verwendung eines Spülgasstromes und/oder
   - einer Evakuierung erfolgt.

7. Verfahren zur Lastanpassung, Mengen- und Reinheitskontrolle nach Anspruch 6, **dadurch gekennzeichnet, dass** nach Beendigung der Regenerierung der Druck im Adsorbers (2) erhöht und der Adsorber (2) mit Rohprodukt, insbesondere teilgereinigtem Rohprodukt, bespannt wird.

8. Verfahren zur Lastanpassung, Mengen- und Reinheitskontrolle nach Anspruch 7, **dadurch gekennzeichnet, dass** die Bespannung mit teilgereinigtem Rohprodukt aus einem Druckpuffer (6) oder aus einem weiteren Adsorber (2") erfolgt.

9. Druckwechseladsorptionsanlage zur Durchführung eines Verfahrens nach einem der Ansprüche 1 bis 8, umfassend

   - wenigstens einen Adsorber (2) zur Abtrennung einer stärker adsorbierenden Komponente aus einem Rohprodukt, wobei der Adsorber (2) eine mittels eines Feedgasventils (101, 111, 121) verschließbare Feedgaseinleitung und eine mittels eines Produktventils (102, 112, 122) verschließbare Produktgasableitung aufweist,
   - einen Produktpuffer (3) zur Aufnahme von gereinigtem Produktgas (P) aus dem Adsorber (2) über die Produktgasableitung,
   - eine Mengenmesseinrichtung (4) zur Bestimmung der dem Produktpuffer (3) entnommene Menge,
   - eine Druckmesseinrichtung (5) zur Bestimmung des Drucks im Produktpuffer (3),

   wobei die Druckwechseladsorptionsanlage (1) eine Steuer-und Regelungseinrichtung (8) aufweist, die geeignet ist, der aus dem wenigstens einen Adsorber (2) während des Produktionstaktes entnommene Menge $M_A(t)$ des Produktgases (P) durch die Druckmesseinrichtung (5) und die Mengenmesseinrichtung (4) zu ermitteln, , zu verarbeiten und auf Basis dieser Werte eine Zeitpunkt zur Beendigung der Feedgaseinleitung und der Produktgasableitung zu ermitteln, wobei die Menge $M_A(t)$ aus der dem Produktpuffer (3) entnommenen Menge $Q(t)$ und dem Druckverlauf im Produktpuffer (3) berechnet wird, wobei die Beendigung erfolgt, wenn die Menge $M_A(t)$ größer oder gleich einer vorgegebenen Menge $M_{Design}$ ist, wobei die Steuer-und Regelungseinrichtung (8) ausgebildet ist, bei Vorliegen dieses Zeitpunkts einen Steuerimpuls an das Feedgasventil (101, 111, 121) und das Produktventil (102, 112, 122) zu senden.

**Claims**

1. Method for load adaptation, quantity and purity checking of a pressure-swing adsorption plant (1), wherein the pressure-swing adsorption plant (1) runs through a work cycle and the work cycle comprises at least one production cycle,
   wherein
   during the production cycle, an uninterrupted supply of a feed gas (F) into at least one adsorber (2) takes place and the point in time at which the production cycle is terminated is determined by

   - a determination of the quantity $M_A(t)$ of the product gas (P) taken from the at least one adsorber (2) during the production cycle, wherein the production cycle is terminated when the quantity $M_A(t)$ is greater than or equal to a specified quantity $M_{design}$, and wherein the quantity $M_A(t)$ is calculated from the quantity $Q(t)$, taken from the product buffer (3) and measured, and from the pressure curve in the product buffer (3), wherein the specified quantity $M_{design}$ corresponds to a defined quantity of product gas which can be provided by the plant in one work cycle in compliance with the desired degree of purity, wherein the product buffer is a device that is designed to store product gas and to supply it to a consumer as needed.

2. Method for load adaptation, quantity and purity checking according to claim 1, **characterized in that** the production cycle is terminated when $M_A(t) \geq M_{design}$, wherein the quantity $M_A(t)$ is calculated according to the following formula

$$M_A(t) = \int_0^t Q(t')dt' + M_p(0)\left\{\left(\frac{P(t)}{P(0)}\right)^{\frac{1}{K}} - 1\right\}$$

wherein

- t is the time in seconds since the start of the production cycle,
- $M_A(t)$ is the quantity in kg taken from the adsorber (2) since the start of the production cycle,
- Q(t) is the quantity in kg taken from the product buffer (3) during the production cycle,
- $M_p(O)$ is the mass in the adsorber (2) at the start of the production cycle,
- where $M_p(O)$ is calculated according to the following formula

$$M_p(0) = V * \rho(t=0),$$

wherein
- V is the volume of the product buffer (3) in $m^3$, and
- $\rho$ is the density of the product gas in the buffer in $kg/m^3$ at t=0,
- P(t) is the pressure in the product buffer (3) at time t in bar,
- P(0) is the pressure in the product buffer (3) at time t=0 in bar, and
- K is any real number from 1 to 1.4.

3. Method for load adaptation, quantity and purity checking according to any one of the preceding claims, **characterized in that,** prior to the production cycle, a pressure build-up takes place in the adsorber (2) by means of an introduction of the feed gas (F) into the adsorber (2).

4. Method for load adaptation, quantity and purity checking according to claim 3, **characterized in that** the pressure build-up in the adsorber (2) is terminated and a transition into the production cycle takes place when the pressure in the adsorber (2) is greater than or equal to the pressure in the product buffer (3).

5. Method for load adaptation, quantity and purity checking according to any one of the preceding claims, **characterized in that,** after the end of the production cycle, the adsorber (2) is depressurized by means of a pressure equalization, wherein in particular the pressure equalization takes place by means of a pressure release in co-current flow into a pressure buffer (6) or the pressure equalization in a first adsorber (2') takes place by means of a pressure release into a second adsorber (2").

6. Method for load adaptation, quantity and purity checking according to claim 5, **characterized in that,** after the end of depressurization of the adsorber (2), the adsorber (2) is regenerated by means of

- a pressure release in counter-current flow to the atmosphere and/or
- a use of a purge gas stream and/or
- an evacuation.

7. Method for load adaptation, quantity and purity checking according to claim 6, **characterized in that,** after the end of regeneration, the pressure in the adsorber (2) is increased and the adsorber (2) is covered with raw product, in particular partially purified raw product.

8. Method for load adaptation, quantity and purity checking according to claim 7, **characterized in that** the covering with partially purified raw product is effected out of a pressure buffer (6) or out of a further adsorber (2").

9. Pressure-swing adsorption plant for carrying out a method according to any one of claims 1 to 8, comprising

- at least one adsorber (2) for separating a more strongly adsorbent component from a raw product, wherein the adsorber (2) has a feed gas supply line which can be closed by means of a feed gas valve (101, 111, 121) and a product gas discharge line which can be closed by means of a product valve (102, 112, 122),
- a product buffer (3) for receiving purified product gas (P) from the adsorber (2) via the product gas discharge line,
- a quantity measurement device (4) for determining the quantity taken from the product buffer (3),
- a pressure measurement device (5) for determining the pressure in the product buffer (3),

wherein
the pressure-swing adsorption plant (1) has a control and regulating device (8) which is suitable for determining, by means of the pressure measurement device (5) and the quantity measurement device (4), the quantity $M_A(t)$ of product gas (P) taken from the at least one adsorber (2) during the production cycle, for processing it and for determining, on the basis of these values, a point in time for the termination of feed gas introduction and product gas discharge, wherein the quantity $M_A(t)$ is calculated from the quantity Q(t), taken from the product buffer (3), and the pressure curve in the product buffer (3), wherein the termination takes place when the quantity $M_A(t)$ is greater than or equal to a specified quantity $M_{design}$, wherein the control and regulating device (8) is designed to send a control pulse to the feed gas valve (101, 111, 121) and to the product valve (102, 112, 122) at this point in time.

**Revendications**

1. Procédé pour l'adaptation de la charge et pour le contrôle de la quantité et de la pureté d'une installation d'adsorption modulée en pression (1), l'installation d'adsorption modulée en pression (1) passant par un cycle de travail et le cycle de travail comprenant au moins un cycle de production,
   dans lequel
   pendant le cycle de production, un apport ininterrompu d'un gaz d'alimentation (F) a lieu dans au moins un adsorbeur (2) et le moment de l'arrêt du cycle de production est déterminé par

   - une détermination de la quantité $M_A(t)$ du gaz produit (P) prélevée dudit au moins un adsorbeur (2) pendant le cycle de production, l'arrêt du cycle de production ayant lieu lorsque la quantité $M_A(t)$ est supérieure ou égale à une quantité prédéfinie $M_{Design}$ et la quantité $M_A(t)$ étant calculée à partir de la quantité Q(t) prélevée et mesurée du tampon de produit (3) et de l'évolution de la pression dans le tampon de produit (3), la quantité prédéfinie $M_{Design}$ correspondant à une quantité définie de gaz produit qui peut être préparée par l'installation dans un cycle de travail tout en respectant le degré de pureté souhaité, le tampon de produit étant un dispositif qui est conçu pour stocker le gaz produit et l'amener en cas de besoin à un consommateur.

2. Procédé pour l'adaptation de la charge et pour le contrôle de la quantité et de la pureté selon la revendication 1, **caractérisé en ce que** le cycle de production est arrêté lorsque $M_A(t) \geq M_{Design}$, la quantité $M_A(t)$ étant calculée selon la formule suivante

$$M_A(t) = \int_0^t Q(t')dt' + M_p(0)\left\{\left(\frac{P(t)}{P(0)}\right)^{\frac{1}{\kappa}} - 1\right\}$$

dans laquelle

- t est le temps depuis le début du cycle de production en secondes,
- $M_A(t)$ est la quantité prélevée de l'adsorbeur (2) depuis le début du cycle de production en kg,
- Q(t) est la quantité prélevée du tampon de produit (3) pendant le cycle de production en kg,
- $M_p(0)$ est la masse dans l'adsorbeur (2) au début du cycle de production,
- $M_p(0)$ étant calculée selon la formule suivante

$$M_P(0) = V * \rho(t=0),$$

dans laquelle
- V est le volume du tampon de produit (3) en $m^3$ et

- $\rho$ est la densité du gaz produit dans le tampon en kg/m$^3$ à t = 0,
- P(t) est la pression dans le tampon de produit (3) au moment t en bars,
- P(0) est la pression dans le tampon de produit (3) au moment t = 0 en bars et
- K est chaque nombre réel de 1 à 1,4.

**3.** Procédé pour l'adaptation de la charge et pour le contrôle de la quantité et de la pureté selon l'une quelconque des revendications précédentes, **caractérisé en ce que,** avant le cycle de production, une montée en pression a lieu dans l'adsorbeur (2) au moyen d'une introduction du gaz d'alimentation (F) dans l'adsorbeur (2).

**4.** Procédé pour l'adaptation de la charge et pour le contrôle de la quantité et de la pureté selon la revendication 3, **caractérisé en ce que** la montée en pression dans l'adsorbeur (2) est arrêtée et une transition vers le cycle de production a lieu lorsque la pression dans l'adsorbeur (2) est supérieure ou égale à la pression dans le tampon de produit (3).

**5.** Procédé pour l'adaptation de la charge et pour le contrôle de la quantité et de la pureté selon l'une quelconque des revendications précédentes, **caractérisé en ce que,** après l'arrêt du cycle de production, une détente de l'adsorbeur (2) a lieu au moyen d'une compensation de pression, la compensation de pression ayant en particulier lieu au moyen d'une détente en courant parallèle dans un tampon de pression (6) ou la compensation de pression dans un premier adsorbeur (2') ayant lieu au moyen d'une détente dans un deuxième adsorbeur (2").

**6.** Procédé pour l'adaptation de la charge et pour le contrôle de la quantité et de la pureté selon la revendication 5, **caractérisé en ce que,** après l'arrêt de la détente de l'adsorbeur (2), une régénération de l'adsorbeur (2) a lieu au moyen

- d'une détente à contre-courant par rapport à l'atmosphère et/ou
- d'une utilisation d'un flux de gaz de rinçage et/ou
- d'une mise sous vide.

**7.** Procédé pour l'adaptation de la charge et pour le contrôle de la quantité et de la pureté selon la revendication 6, **caractérisé en ce que,** après l'arrêt de la régénération, la pression dans l'adsorbeur (2) est augmentée et l'adsorbeur (2) est recouvert par du produit brut, en particulier du produit brut partiellement purifié.

**8.** Procédé pour l'adaptation de la charge et pour le contrôle de la quantité et de la pureté selon la revendication 7, **caractérisé en ce que** le recouvrement a lieu avec du produit brut partiellement purifié provenant d'un tampon de pression (6) ou d'un autre adsorbeur (2").

**9.** Installation d'adsorption modulée en pression pour la réalisation d'un procédé selon l'une quelconque des revendications 1 à 8, comprenant

- au moins un adsorbeur (2) pour séparer un composant hautement adsorbant d'un produit brut, l'adsorbeur (2) présentant une introduction de gaz d'alimentation pouvant être fermée par une vanne à gaz d'alimentation (101, 111, 121) et une conduite d'évacuation de gaz produit pouvant être fermée au moyen d'une vanne à produit (102, 112, 122),
- un tampon de produit (3) pour recevoir du gaz produit purifié (P) provenant de l'adsorbeur (2) via la conduite d'évacuation de gaz produit,
- un dispositif de mesure de quantité (4) pour déterminer la quantité prélevée du tampon de produit (3),
- un dispositif de mesure de pression (5) pour déterminer la pression dans le tampon de produit (3),

dans laquelle
l'installation d'adsorption à pression modulée (1) présente un dispositif de commande et de régulation (8) qui est approprié pour déterminer la quantité $M_A(t)$ de gaz produit (P) prélevée dudit au moins un adsorbeur (2) pendant le cycle de production à l'aide du dispositif de mesure de pression (5) et du dispositif de mesure de quantité (4), pour la traiter et pour déterminer, sur base de ces valeurs, un moment pour arrêter l'introduction du gaz d'alimentation et l'évacuation du gaz produit, la quantité $M_A(t)$ étant calculée à partir de la quantité Q(t) prélevée du tampon de produit (3) et de l'évolution de la pression dans le tampon de produit (3), l'arrêt ayant lieu lorsque la quantité $M_A(t)$ est supérieure ou égale à une quantité prédéfinie $M_{Design}$, le dispositif de commande et de régulation (8) étant conçu pour envoyer une impulsion de commande à la vanne à gaz d'alimentation (101, 111, 121) et à la vanne à produit (102, 112, 122) lorsque ce moment se présente.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20080047426 A
- EP 2181752 A1